Europäisches Patentamt

European Patent Office

Office européen des brevets

(11) Publication number: **0 098 171**
**B1**

# (12) EUROPEAN PATENT SPECIFICATION

(45) Date of publication of patent specification: **22.03.89**

(51) Int. Cl.⁴: **G 06 F 11/22, G 06 F 11/14**

(21) Application number: **83303788.0**

(22) Date of filing: **30.06.83**

(54) **History memory control system.**

(30) Priority: **30.06.82 JP 113464/82**

(43) Date of publication of application:
**11.01.84 Bulletin 84/02**

(45) Publication of the grant of the patent:
**22.03.89 Bulletin 89/12**

(84) Designated Contracting States:
**DE FR GB**

(56) References cited:
**FR-A-1 431 363**
**US-A-3 659 272**
**US-A-3 688 263**

**PATENTS ABSTRACTS OF JAPAN, vol. 6, no. 84 (P-117)962r, 22nd May 1982 & JP - A - 57 20 851**

**IBM TECHNICAL DISCLOSURE BULLETIN, vol. 22, no. 8B, January 1980, pages 3780-3781, New York, US; J.A. KISELAK et al.: "Miroprogram trace facility"**

(73) Proprietor: **FUJITSU LIMITED**
**1015, Kamikodanaka Nakahara-ku Kawasaki-shi Kanagawa 211 (JP)**

(72) Inventor: **Ohnishi, Katsumi c/o Fujitsu Limited Patent Department 1015 Kamikodanaka Nakahara-ku Kawasaki (JP)**

(74) Representative: **Sunderland, James Harry et al HASELTINE LAKE & CO Hazlitt House 28 Southampton Buildings Chancery Lane London WC2A 1AT (GB)**

(56) References cited:

**IBM TECHNICAL DISCLOSURE BULLETIN, vol. 18, no. 2, July 1975, page 373, New York, US; N.L. BROOKS et al.: "Microcode controlled event recording"**

**IBM TECHNICAL DISCLOSURE BULLETIN, vol. 11, no. 12, May 1969, pages 1639-1640, New York, US; H. SPERA, Jr.: "Microprogramming trap"**

Courier Press, Leamington Spa, England.

**Description**

This invention relates to a history memory control system for collecting internal device state information for use as diagnostic information when a fault occurs in a data processing system, and more specifically to a freeze and release memory control system thereof.

A data processing system is continuously collecting state information of various latches for control or state display, to aid in analysis of causes of faults generated.

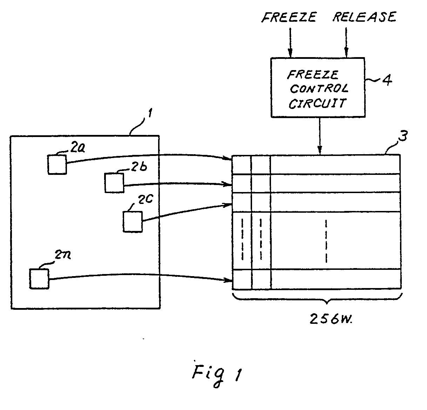

Fig. 1 is a schematic block diagram of an existing history memory device. 1 is a data processing system to be diagnosed, 2a to 2n are latches, 3 is a history memory, 4 is a freeze control circuit.

A history memory has, for example, a memory capacity of 256 words and is capable of collecting information 256 times for latches 2a to 2n. However, since memory capacity is finite, the oldest information must be sent out in order to store the latest information. When the memory is updated by the latest state information, if a fault occurs, history as close as possible to the timing of the fault can be obtained.

The freeze control circuit 4 inhibits update of history memory 3 and freezes the contents of history memory 3 when an error is detected by a machine check or program check, or some other predetermined condition is·set, for example, when the COMPARE-ADDRESS and ADDRESS match, when a program check event is generated, when an instruction for placing the processing system in the STOP condition is issued, or when a hardware instruction for freezing the history memory is issued. When automatic recovery by machine retrial or restart by system recovery from a fault is carried out if an error occurs, or when status matching to predetermined conditions occurs, the frozen history memory 3 is released and latch status information collection is again executed.

However, this system has often showed that the history memory was frozen considerably before the actual failure occurred and therefore necessary status information was not collected and fault analysis could not be performed.

Since the condition for starting control of the freeze control circuit 4 is fixed within the machine by hardware circuitry, the timing for collecting system status information could not be controlled as desired.

It is an object of this invention to execute freeze and release control of a history memory using the existing fixed control system in hardware and moreover to make it possible also to set freeze and release control timings as desired, without relying on the fixed hardware control system.

IBM Technical Disclosure Bulletin, Vol. 22, No. 8B, January 1980, pp 3780—3781, discloses a microprogram trace facility for taking a snapshot of 32 executed control words, the addresses of the control words and associated information being stored in an array. The snapshot window can be placed at will. A special bit is contained in every control word. It is used to stop execution of control words, by setting a trigger, and to mark the start of the window. Execution is then started at a designated point by resetting the trigger, for example in response to a particular control word or a particular instruction. The snapshot record mechanism is armed in advance by another special bit inserted in a control word prior to that starting the window. The window ends when the array overflows (32 words have been executed) or when another special bit stops execution of control words at an earlier moment.

IBM Technical Disclosure Bulletin, Vol. 18, No. 2, July 1975, page 373, proposes, in a microprogrammed system using erasable microcode, the loading of selected event recording microcode which links to ordinary functional microcode. Selected status signals are recorded, conveniently in unused/idle locations of control storage which may be cyclically overwritten.

IBM Technical Disclosure Bulletin, Vol. 11, No. 12, May 1969, proposes a system in which traps can be taken at any point in a microinstruction routine. A test lead is connected to a point in the computer so that a signal on this lead can cause the system to trap to a related sequence of microinstruction, logging machine conditions, registers and addresses in existence at that time.

According to the present invention there is provided a history memory control system in a data processing system, comprising a history memory for serially collecting and storing internal state information of the data processing system, whereby, when the history memory is in a released condition, the stored imformation is continuously updated by eliminating the oldest information in order to store the latest information, a freeze control circuit operable to effect freeze control of the history memory, inhibiting update of the content of the history memory, and release control which releases the freeze, means for instructing the freeze control circuit to effect freeze or release control in accordance with predetermined hardware conditions, and a microprogram processing system, characterised in that

a control field is provided within a microinstruction, for holding history memory control information instructing freeze or release of the history memory,

means are provided for decoding said control field of a microinstruction and operable to generate a signal for instructing the freeze control circuit to freeze or release the history memory when history memory control information exists in the control field, whereby

the history memory is subject to freeze and release control in response to such predetermined hardware conditions and when a microinstruction having such history memory control information is executed.

Reference is made, by way of example to the accompanying drawings, in which:—

Fig. 1 is a block diagram of an existing history memory device as explained above.

Fig. 2 is a block diagram of a microprogram processing system of an embodiment of the present invention. In this Figure 3, is a history memory corresponding to that described in Fig. 1. 5 to 12 indicate the pipeline structure of a microprogram processing system, and 13 to 19 provide a freeze control circuit.

Fig. 3 is a block diagram illustrating overall structure of a data processing system including a microprogram processing system. In this Figure, 20 is a central processing unit (CPU), 21 is a memory control unit (MCU), 22 is a main storage (MSU), 23 is a channel processor, 24 is a service processor (SVP), 25 is a system console interface unit (SCI), 26 is a channel unit, 27 is an input/output unit (IO).

Fig. 4 is a diagram of control storage (CS) 6 shown in Fig. 2. In this figure, 30 is a process control field (PCR), 31 is an error check correction field (ECC).

Fig. 5 is an example of a flow chart for setting a freeze/release instruction code in a microoperation word.

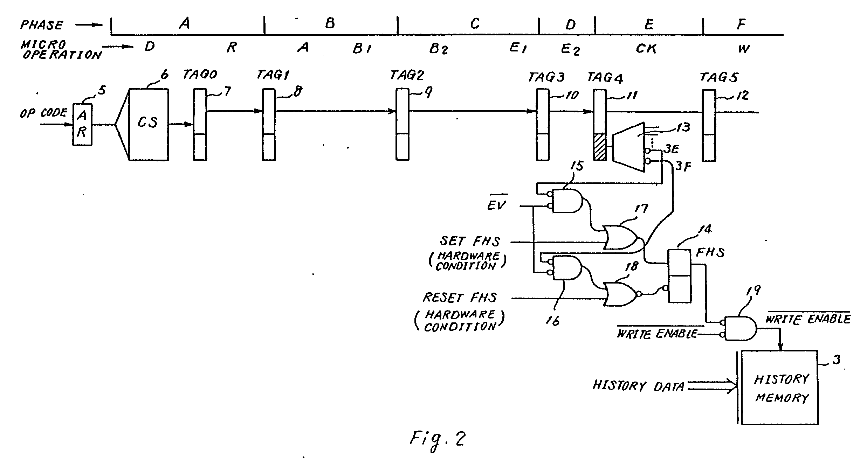

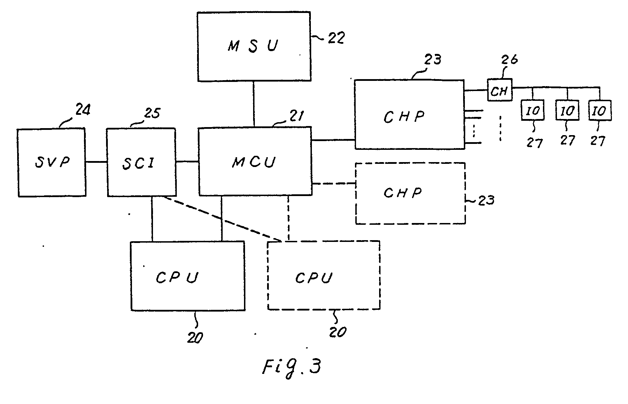

The microprogram processing system shown in Fig. 2 is provided in the CPU 20 of Fig. 3. Operations of the embodiment shown in Fig. 2 are described below.

In the pipeline system indicated by 5 to 12, 5 is an address register AR to which an OP code is set. 6 is a control storage CS in which microoperation words are stored at addresses corresponding to OP codes. 7 to 12 are registers called TAG0 to TAG5 which control operation in each of phases A to F of the pipeline. Microoperation words are sequentially shifted from TAG0 to TAG5, and execute sequentially microoperations D, R, A, $B_1$, $B_2$, $E_1$, $E_2$, CK, and W in phases A to F. Microoperation D is word fetch from CS upon decoding of the OP code. R is an address register control operation. A is an address operation. $B_1$, $B_2$ are operand load processing operations. $E_1$, $E_2$ are execution operations. CK is a data check operation. W is a data write operation.

In the freeze control circuit, 13 is a decoder. This decoder usually provides operation control. In this embodiment, however, it is used for fetching freeze or release instruction information. 14 is a freeze/history latch FHS, 15 and 16 are NOR gates, 17 is an OR gate, 18 and 19 are NOR gates, respectively. In addition, EV is a valid signal in the phase E, SET FHS and RESET FHS are freeze and release signals generated by hardware conditions.

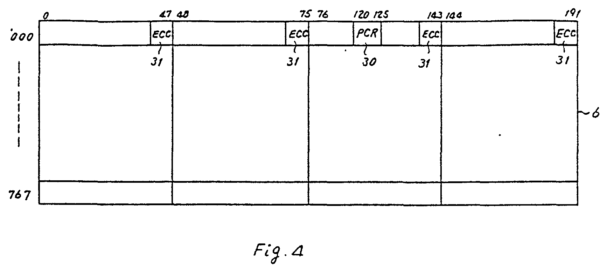

In this embodiment, as shown in Fig. 4, the control memory CS is composed of 768 words×192 bits. With regard to the microoperation words of a desired instruction, a code instructing freeze or release of history memory is set in the control region of 6 bits called the process control field (PCR) (however, only when this region is vacant), this code is then decoded by the decoder 13, then the write operation of history memory is controlled through the freeze control circuits. For example, hexadecimal code "3E" is considered to be the freeze instruction, while hexadecimal code "3F" is taken to be the release instruction. The NOR gates 15, 16 are circuits for taking timing of the end of phase D using the EV signal, while the OR gate 17 and NOR gate 18 respectively provide the logical OR between the freeze signal ("3E") and release signal ("3F") sent from the decoder 13 and the freeze signal SET FHS and release signal RESET FHS set by existing hardware conditions.

Thereby, the freeze history latch FHS 14 can be controlled for set and reset by hardware conditions or by microprogram instructions. When the freeze history latch FHS 14 is set by any freeze signal, the write enable signal is inhibited by the NOR gate 19 and the history memory 3 is frozen. The latch FHS 14 is reset by any release signal. Thereby, the NOR gate 19 is released and the write enable signal can then be applied to the history memory 3.

The decoder 13 used in the embodiment of Fig. 2 is not always required to be located after TAG4.

It will be noted that the "3E" and "3F" outputs of the decoder 13 are inverting outputs, that the inputs to gate 15 are inverting inputs and that other gates have inverting inputs and/or outputs as indicated.

Thus, gate 15 effectively AND's a valid signal EV (inverted from $\overline{EV}$) and an uninverted freeze signal "3E". Gate 16 effectively AND's EV and an uninverted release signal "3F". Gate 18 effectively OR's its inputs to the reset side of flip-flop 14.

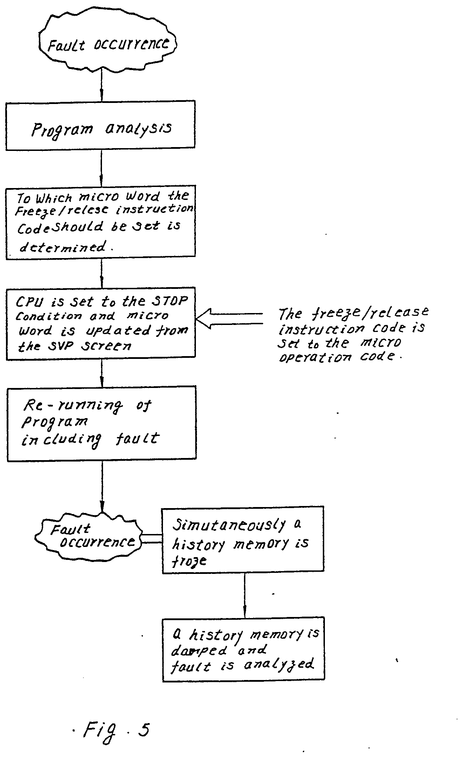

Here, an example of operation for setting a freze/release instruction code into a microoperation word will be described by referring to Figs. 3 to 5.

If a fault occurs, SVP 24 analyses in which program a fault has occurred and then judges in which microword the freeze/release instruction code should be set. SVP 24 sets the CPU 20 in the STOP condition and then changes a microword using the display screen provided thereto and updates contents of CS 6.

Thereafter, the program which generated the fault is run again. At this time, a freeze instruction code is in a microoperation word which is nearer to a fault timing, the history memory is frozen at such a timing that internal condition of CPU before and after detection of a fault is collected accurately. Thereafter, SVP 24 dumps contents of history memory and analyses a fault.

As described above, this invention is capable of setting the necessary freeze or release timing more precisely than the existing system depending only on the hardware condition, by using the process control field (PCR) of an appropriate microoperation word in the control memory 6.

## Claims

1. A history memory control system in a data processing system, comprising a history memory (3) for serially collecting and storing internal state information of the data processing system, whereby, when the history memory is in a released condition, the stored information is continuously updated by eliminating the oldest information in order to store the latest information, a freeze control circuit (15 to 19) operable to effect freeze control of the history memory, inhibiting update of the content of the history memory, and release control which releases the freeze, means for instructing the freeze control circuit to effect freeze or release control in accordance with predetermined hardware conditions, and a microprogram processing system (5 to 12), characterised in that

a control field (PCR) is provided within a microinstruction for holding history memory control information instructing freeze or release of the history memory (3),

means (13) are provided for decoding said control field (PCR) of a microinstruction and operable to generate a signal for instructing the freeze control circuit (15 to 19) to freeze or release the history memory (3) when history memory control information exists in the control field (PCR), whereby

the history memory (3) is subject to freeze and release control in response to such predetermined hardware conditions and when a microinstruction having such history memory control information is executed.

2. A history memory control system according to claim 1 characterised in that

the means for decoding said control field of a microinstruction comprise a decoder (13) which decodes the said control field (PCR) and generates a freeze instruction or a release instruction signal accordingly,

and in that the freeze control circuit comprises

a first gate circuit (15) for ANDing a validity signal (EV), which indicates that a pertinent microinstruction is effective, and said freeze instruction signal (3E),

a second gate circuit (16) for ANDing the validity signal (EV), and said release instruction signal (3F),

a third gate circuit (17) for ORing a freeze control signal based on a hardware condition (SET FHS) and an output of the first gate circuit (15),

a fourth gate circuit (18) for ORing a release control signal based on a hardware condition (RESET FHS) and an output of the second gate circuit (16),

a flip-flop (14) which receives an output of the third gate circuit (17) as a set input and an output of the fourth gate circuit (18) as a reset input, and

a fifth gate circuit (19) which controls the write enable signal to the history memory (3) in dependence upon the output of the flip-flop (14).

3. A history memory control system according to claim 1 or claim 2, wherein the microprogram processing system has a pipeline structure for executing microinstructions, read from a control memory (6), in a plurality of stages (7 to 12) and the history memory control information in the control field (PCR) is decoded by one predetermined stage of the pipeline.

**Patentansprüche**

1. Geschichtsspeicher-Steuersystem in einem Datenverarbeitungssystem, mit einem Geschichtsspeicher (3) zum seriellen Sammeln und Speichern von interner Statusinformation des Datenverarbeitungssystems, wodurch dann, wenn der Geschichtsspeicher in einem freigegebenen Zustand ist, die gespeicherte Information kontinuierlich durch Eliminieren der ältesten Information aktualisiert wird, um die jüngste Information zu speichern, einer Einfriersteuerschaltung (15 bis 19), die betreibbar ist, um eine Einfriersteuerung des Geschichtsspeichers zu bewirken, wobei die Aktualisierung des Inhalts des Geschichtsspeichers gesperrt ist und die Freigabesteuerung zu bewirken, welche das Einfrieren löst, Einrichtungen, um der Einfriersteuerschaltung zu befehlen, die Einfrier- oder die Freigabesteuerung in Übereinstimmung mit vorbestimmten Hartwarezuständen zu bewirken, und einem Mikroprogramm-Verarbeitungssystem (5 bis 12), dadurch gekennzeichnet, daß

ein Steuerfeld innerhalb einer Mikroinstruktion vorgesehen ist, um die Geschichtsspeicher-Steuerinformation zu halten, welche das Einfrieren oder das Freigeben des Geschichtsspeichers (3) befiehlt,

Einrichtungen (13) zum Dekodieren des genannten Steuerfeldes (PCR) über einen Mikrobefehl vorgesehen und betreibbar sind, um ein Signal zu erzeugen, daß der Einfriersteuerschaltung (15 bis 19) befiehlt, den Geschichtsspeicher (3) einzufrieren oder freizugeben, wenn die Geschichtsspeicher-Steuerinformation in dem Kontrollfeld (PCR) existiert, wodurch

der Geschichtsspeicher (3) einer Einfrier- und Freigabesteuerung unterliegt, in Abhängigkeit von solch vorbestimmten Hartwarekonditionen und wenn ein Mikrobefehl, der solch eine Geschichtsspeicher-Steuerinformation hat, ausgeführt wird.

2. Geschichtsspeicher-Steuersystem nach Anspruch 1, dadurch gekennzeichnet, daß

die Einrichtung zum Dekodieren des genannten Steuerfeldes eines Mikrobefehls einen Dekoder (13) umfaßt, der das genannte Steuerfeld (PCR) dekodiert und entsprechend ein Eingabebefehls- oder Freigabebefehls-signal erzeugt,

und daß die Einfriersteuerschaltung umfaßt:

eine erste Gateschaltung (15), zur UND-Verknüpfung eines Gültigkeitssignals (EV), welches anzeigt, daß ein zugehöriger Mikrobefehl effektiv ist, mit dem genannten Einfrierbefehlssignal (3E),

eine zweite Gateschaltung (16) zur UND-Verknüpfung des Gültigkeitssignals (EV) mit dem genannten Freigabebefehlssignal (3F),

eine dritte Gateschaltung (17) zur ODER-Verknüpfung eines Einfriersteuersignals, das auf einem Hartwarezustand (SET FHS) basiert, mit einem Ausgang der ersten Gateschaltung (15),

eine vierte Gateschaltung (18) zur ODER-Verknüpfung eines Freigabesteuersignals, das auf einem Hartwarezustand (RESET FHS) basiert, mit einem Ausgangs der zweiten Gateschaltung (16), ein Flip-Flop (14), welches einen Ausgang von der dritten Gateschaltung (17) als einen Setzeingang und einen Ausgang der vierten Gateschaltung (18) als einen Rücksetzeingang empfängt und eine fünfte Gateschaltung (19), welche das Schreibfreigabesignal des Geschichtsspeichers (3) in Abhängigkeit von dem Ausgang des Flip-Flop (14) steuert.

3. Geschichtsspeicher-Steuersystem nach Anspruch 1 oder 2, bei dem das Mikroprogramm-verarbeitungssystem eine Pipelinestruktur zur Ausführung von Mikrobefehlen hat, die von einem Steuerspeicher (6) gelesen werden, in einer Vielzahl von Stufen (7 bis 12), und die Geschichtsspeicher-Steuerinformation in dem Steuerfeld (PCR) durch ein vorbestimmte Stufe der Pipeline dekodiert wird.

**Revendications**

1. Système de commande de mémoire d'historique dans un système de traitement de données, comprenant une mémoire d'historique (3) pour collecteur et mémoriser en série des informations d'états internes du système de traitement de données, les information mémorisées étant, de la sorte, continuellement mises à jour en éliminant les informations les plus anciennes afin de mémoriser les informations les plus récentes, quand la mémoire d'historique est dans un état de libération, un circuit de commande de figeage (15 à 19) pouvant être mis en fonctionnement pour effectuer une commande de figeage de la mémoire d'historique, interdisant la mise à jour du contenu de la mémoire d'historique, et une commande de libération qui libère le figeage, un moyen pour donner au circuit de commande de figeage l'instruction d'effectuer une commande de figeage ou de libération selon des conditions matérielles prédéterminées, et un système de traitement microprogrammé (5 à 12), caractérisé en ce que une zone de commande (PRC) est prévue dans une micro-instruction pour maintenir des informations de commande de mémoire d'historique donnant l'instruction d'un figeage ou d'une libération de la mémoire d'historique (3),

des moyens (13) sont prévus pour décoder la zone de commande (PRC) d'une micro-instruction et pouvant être mis en fonctionnement pour engendrer un signal donnant l'instruction au circuit de commande de figeage (15 à 19) de figer ou de libérer la mémoire d'historique (3) quand des informations de commande de mémoire d'historique sont présentes dans la zone de commande (PCR),

la mémoire d'historique (3) étant, de la sorte, soumise à une commande de figeage et de libération en réponse à ces conditions matérielles prédéterminées et quand une micro-instruction comportant ces informations de commande de mémoire d'historique est exécutée.

2. Système de commande de mémoire d'historique selon la revendication 1, caractérisé en ce que les moyens pour décoder la zone de commande d'une micro-instruction comprennent un décodeur (13) qui décode la zone de commande (PCR) et engendre un signal d'instruction de figeage ou un signal d'instruction de libération en conséquence,

et en ce que le circuit de commande de figeage comprend

un premier circuit à porte (15) pour exécuter la fonction logique ET entre un signal de validité (EV), qui indique qu'une micro-instruction adéquate est effective, et le signal d'instruction de figeage (3E),

un deuxième circuit à porte (16) pour exécuter la fonction logique ET entre le signal de validité (EV) et le signal d'instruction de libération (3F),

un troisième circuit à porte (17) pour exécuter la fonction logique OU entre un signal de commande de figeage dépendant d'une condition matérielle (SET FHS) et un signal de sortie du premier circuit à porte (15),

un quatrième circuit à porte (18) pour exécuter la fonction logique OU entre un signal de commande de libération dépendant d'une condition matérielle (RESET FHS) et un signal de sortie du deuxième circuit à porte (16),

une bascule (14) qui reçoit un signal de sortie du troisième circuit à porte (17) comme signal d'entrée de positionnement et un signal de sortie du quatrième circuit à porte (18) comme signal d'entrée de remise à l'état initial, et

un cinquième circuit à porte (19) qui commande le signal de validation d'écriture destiné à la mémoire d'historique (3) selon le signal de sortie de la bascule (14).

3. Système de commande de mémoire d'historique selon l'une quelconque des revendications 1 et 2, dans lequel le système de traitement microprogrammé a une structure pipeline pour exécuter des micro-instructions, lues dans une mémoire de commande (6), dans un ensemble d'étages (7 à 12) et les informations de commande de mémoire d'historique de la zone de commande (PCR) sont décodées par un étage prédéterminé du pipeline.

EP 0 098 171 B1

Fig 1

Fig. 2

Fig.3

Fig. 4

Fault occurrence

Program analysis

To Which micro Word the
Freeze/relese instruction
Code Should be Set is
determined.

CPU is Set to the STOP
Condition and micro
Word is updated from
the SVP Screen

The freeze/release
instruction Code is
Set to the micro
operation code.

Re-running of
Program
including fault

Fault
occurrence

Simutaneously a
history memory is
froje

a history memory is
damped and
fault is analyzed

· Fig · 5